# EUROPEAN PATENT SPECIFICATION

(11) **EP 0 490 278 B1**
(45) Date of publication and mention of the grant of the patent: **14.02.1996**
(21) Application number: 91120921.1
(22) Date of filing: 05.12.1991
(51) Int. Cl.: C08G 18/24

(54) **Polyurethane rim elastomers obtained with hydroxyl-containing organotin catalysts**
Polyurethan-Rim-Elastomere hergestellt mit Hydroxyl enthaltende Organozinnkatalysatoren
Elastomères de polyuréthane rim obtenu à partir de catalyseurs d'étain organique contenant hydroxyle

(30) Priority: 12.12.1990 US 626604
(43) Date of publication of application: 17.06.1992
(73) Proprietor: AIR PRODUCTS AND CHEMICALS, INC., Allentown, PA 18195-1501 (US)
(72) Inventor: Dewhurst, John Elton, Macungie, PA 18062 (US); Nichols, James Dudley, Fogelsville, PA 18051 (US)
(74) Representative: Kador & Partner

(56) References cited:
- EP-A- 60 974
- EP-A- 0 417 605
- US-A- 2 885 415
- US-A- 4 981 925

## Description

### TECHNICAL FIELD

The present invention relates to reaction injection molded (RIM) elastomers.

### BACKGROUND OF THE INVENTION

Polyurethane and polyurethaneurea RIM elastomers require the use of tin catalysts for acceptable processing. In a system based on high molecular weight polyether polyols and aromatic diamine chain extenders, it is customary to use dibutyltin dilaurate to catalyze the hydroxyl-isocyanate (OH-NCO) reaction. Without this catalyst additive it is impossible to make a RIM part with sufficient green strength to be demolded. Yet, it is well known that the presence of tin catalyst in the final elastomer limits the thermal stability bf the material since it can catalyze the unzipping of urethane bonds. The need for high thermal stability in RIM elastomers is the result of high paint baking temperatures. Physical distortion, cracking, oiling and blistering can be observed if tin catalyst is present to promote the chemical breakdown of urethane linkages.

One solution to this problem has been the use of polyurea RIM based on isocyanate-reactive components which do not contain OH group, e.g., aliphatic amine terminated polyethers as disclosed in U.S. 4,433,067. Since the reaction of the amino (-NH₂) groups with NCO groups is so rapid, no tin catalyst is needed although there is still some benefit to their use in polyurea RI M elastomers as disclosed in U.S. 4,444,910. However, the drawback to this solution is the high reactivity of the aliphatic amine terminated polyethers which makes is difficult to achieve high modulus elastomers with good flowability. Additionally, these products are more expensive than conventional RIM polyols and are not available in "filled" versions such as polymer polyols, grafted polyols or PHD polyols.

EP-A-60974 discloses amino and amido dialkyltin dicarboxylates and stannoxy carboxylates useful as catalysts for promoting reaction of organic isocyanates with organic compounds having one or more active hydrogen-containing groups.

### SUMMARY OF THE INVENTION

The present invention is a reaction injected molded (RIM) elastomer comprising the cured reaction product of a polyether polyol of greater than 500 molecular weight, an aromatic diamine chain extender and an aromatic polyisocyanate in the presence of a hydroxyl-containing organotin catalyst, such as, for example, a diorganotin bis(hydroxyl-containing organo) compound.

The use of a hydroxyl-containing organotin catalyst provides for improved thermal stability of conventional polyether polyol polyurethane and polyurethaneurea RIM systems. In addition, unfilled or filled polyols can be used and high modulus elastomers with improved flowability over polyurea RIM systems are obtained.

### DETAILED DESCRIPTION OF THE INVENTION

The RIM elastomer of the invention may be prepared from as few as four ingredients, namely a high molecular weight polyether polyol, an aromatic diamine chain extender, an aromatic polyisocyanate and a hydroxyl-containing diorganotin catalyst.

The polyether polyols useful in the invention include primary and secondary hydroxyl-terminated polyether polyols of greater than 500 average molecular weight having from 2 to 6 functionality, preferably from 2 to 3, and a hydroxyl equivalent weight of from 250 to about 2500. Mixtures of polyether polyols may be used. In a prefered embodiment the polyether polyols have an average molecular weight of at least 6000.

The polyether polyols useful in the invention are polyether polyols made from an appropriate initiator to which lower alkylene oxides such as ethylene oxide, propylene oxide, butylene oxide or mixtures thereof are added resulting in hydroxyl-terminated polyols. When two or more oxides are used, they may be present as random mixtures or as blocks of one or the other polyether. Thus the polyalkylene ether polyols include the poly(alkylene oxide) polymers, such as poly(ethylene oxide) and poly(propylene oxide) polymers and copolymers, with terminal hydroxyl groups derived from polyhydric compounds, including diols and triols; for example, among others, ethylene glycol, propylene glycol, 1,3-butane diol, 1,4-butane diol, 1,6-hexane diol, neopentyl glycol, diethylene glycol, dipropylene glycol, pentaerythritol glycerol, diglycerol, trimethylol propane and like low molecular weight polyols.

In the practice of this invention, a single high molecular weight polyether polyol may be used. Also, mixtures of high molecular weight polyether polyols such as mixtures of di- and tri-functional materials and/or different molecular weight or different chemical composition materials may be used.

The aromatic diamine chain extenders useful in this invention include, for example, 1-methyl-3,5-diethyl-2,4 diami- nobenezene; 1-methyl-3,5-diethyl-2-6-diaminobenzene (both of these materials are also called diethyl toluenediamine or DETDA); 1,3,5-triethyl-2,6-diaminobenzene; 2,4-dimethyl-6-t-butyl-3,5-diaminobenzene; 3,5,3',5'-tetraethyl-4,4'-di- amino diphenylmethane; 1-methyl-3-t-butyl-2,4-diaminobenzene; 1-methyl-5-t-butyl-2,6-diaminobenzene (both these materials are also called t-butyl toluenediamine or TBTDA) and the like. Particularly preferred aromatic diamine chain extenders are DETDA and TBTDA. It is within the scope of the invention to include some aliphatic chain extender materials as described in U.S. 4,246,363 and 4,269,945.

A wide variety of aromatic polyisocyanates may be used. Typical aromatic polyisocyanates include phenylene diisocyanate, toluene diisocyanate and 4,4'-diphenylmethane diisocyanate. Especially suitable are the 2,4- and 2,6-toluene diisocyanates individually or together as their commercially available mixtures. Other especially suitable mixtures of diisocyanates are those known commercially as "crude MDI" also known as PAPI, which contain about 60% of 4,4'-diphenylmethane diisocyanate along with other isomeric and analogous higher polyisocyanates. Also suitable are "prepolymers" of these polyisocyanates comprising a partially pre-reacted mixture of polyisocyanates and polyether polyols.

The hydroxyl-containing diorganotin compound may suitably be an organotin compound of the following general formula: 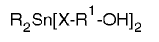 where R is a C₁-C₈ alkyl group, preferably n-butyl or octyl, or an aryl group, preferably phenyl,
R¹ is a C₂-C₂₂ divalent hydrocarbyl group, for example, alkylene, arylene and alkarylene, preferably ethylene, propylene, butylene, 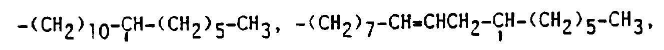 phenylene [-C₆H₄-], -CH₂-C₆H₄-, -CH₂CH₂-C₆H₄-, and -CH₂CH₂CH₂C₆H₄-, which hydrocarbyl group may also contain a hydroxyl substituent; and
X is a linking group which may be -S- or -O₂C-.

When the linking group X is -S-, it is preferred that R⁷ be a hydroxy substituted C₃-C₅ alkylene group such as -CH₂-CH(OH)-CH₂-. When the linking group X is -O₂C-, it is preferred that R¹ be -(CH₂)ₙ-C₆H₄- where n = 0-3.

A general procedure for preparing the diorganotin bis-carboxylates and diorganotin bis-mercaptides of the above general formula would involve charging a mixture of diorganotin oxide (R₂SnO), the appropriate carboxylic acid (HOR¹CO₂H) or mercaptan (HOR¹ SH), in a solvent such as toluene to a reaction vessel and heating the reaction mixture to reflux temperature until the water of reaction has been removed by distillation. The organic solvent can then be evaporated to afford essentially quantitative product yields of the diorganotin bis-carboxylate or bis-mercaptide.

A catalytically effective amount of the diorganotin catalyst is used in a polyether polyol RIM formulation comprising polyisocyanate, aromatic diamine and polyether polyol. Specifically, suitable amounts of a catalyst may range from about 0.025 to 0.3 parts, preferably 0.05 to 0.2 parts, per 100 parts per weight polyol in the RIM elastomer formulation.

Other conventional RIM formulation ingredients may be employed as needed, such as, for example, foam stabilizers, also known as silicone oils or emulsifiers. The foam stabilizer may be an organic silane or siloxane.

Reinforcing materials, if desired, used in the practice of the invention are known to those skilled in the art. For example, chopped or milled glass fibers, chopped or milled carbon fibers and/or other mineral fibers are useful.

Postcuring of the elastomer of the invention is optional and its employment depends on the desired properties of the end product. Postcuring will improve some properties such as heat sag.

### Example 1

### Dibutyltin-bis(2,3-dihydroxypropylmercaptide)

A mixture of 24.9g (0.10 mole) dibutyltin oxide, 21.6g (0.20 mole) 3-mercapto-1,2-propanediol in 300 ml toluene were mixed and reacted as described in Example 1. Removal of the toluene yielded 44.5g (99.5% yield) of dibutyltin-bis-(2,3-dihydroxypropylmercaptide), a straw-colored viscous liquid.

### Example 2

### Dibutyltin-bis[3-(4-hydroxyphenyl)-propionate]

Following the procedure of Example 1, 24.9g (0.10 mole) dibutyltin oxide was reacted with 33.2g (0.20 mole) 3-(4-hydroxyphenyl)propionic acid in 300 ml toluene to give 56g of dibutyltin-bis-3-(4-hydroxyphenyl)propionate which was a white crystalline material melting at 48-50°C.

### Example 3

### Dibutyltin-bis-[2,2-di(hydroxymethyl)propionate]

Following the procedure of Example 1, 24.9g (0.10 mole) dibutyltin oxide was reacted with 26.8g (0.20 mole) 2,2-bis (hydroxymethyl)propionic acid in toluene to give 48g of dibutyltin-bis-2,2-di-(hydroxymethyl)propionate, a white crystalline material melting at 157-161°C.

### Example 4

### Dibutyltin-bis(2-hydroxyethylmercaptide)

Following the procedure of Example 1, 24.9g (0.10 mole) dibutyltin oxide was reacted with 15.6g (0.20 mole) 2-mercaptoethanol in toluene to give 36g of dibutyltin-bis-(2-hydroxyethylmercaptide), a light yellow liquid.

In the following examples, the RIM elastomer runs were conducted using the following materials:
Multranol M 3901 - a glycerine-initiated polyoxyalkylene polyethertriol having a hydroxyl number of 28 from Mobay Corp.
L-5304 - a commercial silicone surfactant from Union Carbide
DC-198 - a commercial silicone surfactant from Air Products and Chemicals, Inc.
Mondur PF - 4,4'-diphenyldiisocyanate, which has been liquified by reaction with a low molecular weight glycol to an NCO content of about 22.6% from Mobay Corp.
Dabco 33LV - a 33% solution of triethylenediamine in a glycol carrier from Air Products and Chemicals, Inc.
DETDA - an 80/20 mixture of 3,5-diethyl-2,4-toluenediamine and 3,5-diethyl-2,6-toluenediamine from Ethyl Corp.
t-BTDA - an 80/20 mixture of 5-t-butyl-2,4-toluenediamine and 3-t-butyl-2,6-toluenediamine from Air Products and Chemicals, Inc.
T-12 - dibutyltin dilaurate from Air Products and Chemicals, Inc.
T-120 - dibutyltin-bis(laurylmercaptide) from Air Products and Chemicals, Inc.
UL-28 - dimethyltin dilaurate from Witco Chemical Corp.

Reaction injection molding elastomers were prepared using a model SA8-20 laboratory machine (LI M Kuntstoff Technologie GmbH, Kittsee, Austria) suitable for processing 2-component mixtures. 10-30 cc/min metering pumps for component "A" (modified methylenediphenyldiisocyanate, MDI) and "B" (polyether polyol plus chain extender, silicone and catalyst) were driven synchronously by sprocket wheels in proportion to the mixture to be processed by means of a variable speed (50-250 rpm) motor. Any desired mixing ratio may be established by changing gears. Components A and B were conveyed into a mixing chamber by individually controlled compressed air actuated valves. A high-speed rotor, continuously adjustable from 10,000 to 18,000 rpm using a frequency transformer, mixed the components.

### Example 5

For Runs A-F flat placque parts (200 x 200 x 2mm with an average weight of 100g) were made according to the formulations in Table 1 and were postcured at 120°C for 1 hour. In each system, the tin metal content was held constant. Thermal stability was determined byannealing the parts for80 minutes at 165°C, followed by visual and tactile inspection. Both Runs A and B made with non-isocyanate-reactive catalysts (T-12 and T-120) crumbled into pieces as a result of this thermal abuse.

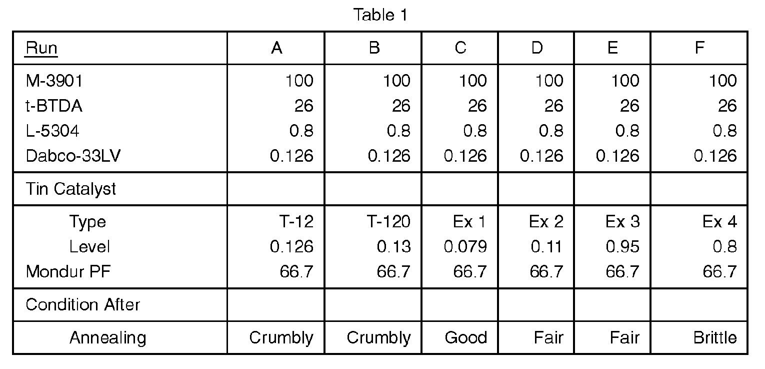

### Example 6

### Dibutyltin bis(12-hydroxystearate)

A mixture of dibutyltin oxide, 31.2g (0.125 mole), 12-hydroxystearic acid, 75g (0.25 mole) and 250ml toluene was charged to a round-bottom flask (fitted with a stirrer, thermocouple, and condenser with a Dean-Stark water trap) and heated at reflux until all water of reaction was collected in the trap. Removal of the toluene (flash evaporator) yielded 125g (97%) of the desired product, a cream colored brittle solid.

### Example 7

### Dibutyltin bis(ricinoleate)

Following the procedure described in Example 11, ricinoleic acid, 74.25g (0.25 mole) was reacted with dibutyltin oxide, 31.2g (0.125 mole) in 250ml toluene. Removal of toluene yielded 120g (94%) of the desired product, a yellow viscous liquid.

### Example 8

For Runs G-N flat placque parts (200 x 200 x 2 mm, with an average weight of 100 grams) were made according to the formulations in Table 2 were postcured at 121°C for one hour. In each system the tin metal content was held constant. Thermal stability was judged by the high temperature heat sags. Lower sags indicate increased thermal stability. Those Runs made with isocyanate-reactive catalysts showed lower heat sags than conventionally used T-12, and, in particular, the tin catalyst in Run I was remarkably good.

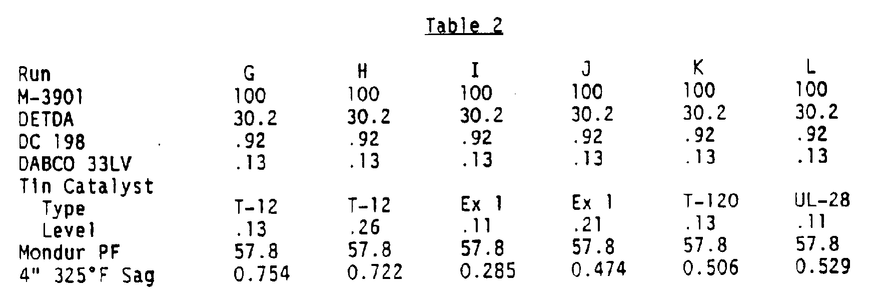

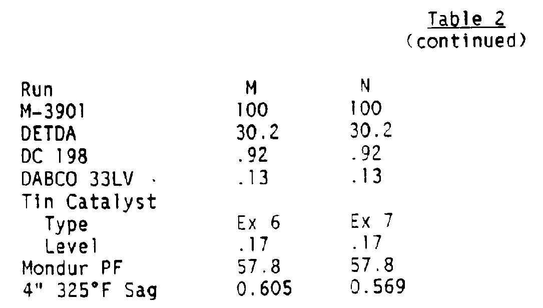

The hydroxyl-containing diorganotin catalysts, being isocyanate-reactive, become part of the polymer matrix and are therefore not sufficiently mobile to promote thermal degradation of urethane-containing elastomers. Surprisingly, these compounds are still able to provide enough catalytic activity to permit the molding of RI M elastomers.

### STATEMENT OF INDUSTRIAL APPLICATION

The present invention provides polyether polyol RIM elastomers made using hydroxyl-containing organotin catalysts.

## Claims

1. A reaction injection molded elastomer made by reacting in a closed mold a composition comprising polyether polyols greater than 500 average molecular weight, an amine terminated chain extender, an aromatic polyisocyanate and an organotin catalyst of the following general formula 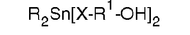 where R is a C₁-C₈ alkyl group or an aryl group,
R¹ is a C₂-C₂₂ divalent hydrocarbyl group which may also contain a hydroxyl substituent; and
X is a linking group which is -S- or -0₂C-.

2. The elastomer of Claim 1 in which R is butyl or octyl.

3. The elastomer of Claim 1 in which X is -S-.

4. The elastomer of Claim 3 in which R¹ is a hydroxy substituted C₃-C₅ alkylene.

5. The elastomer of Claim 3 in which R¹ is -CH₂-CH(OH)-CH₂-.

6. The elastomer of Claim 1 in which X is -0₂C-.

7_{.} The elastomer of Claim 6 in which R¹ is -(CH₂)ₙ-C₆H₄- where n = 0-3.

b8. The elastomer of Claim 7 in which R¹ is -(CH₂)₂-C₆H₄-

9. The elastomer of Claim 6 in which R¹ is 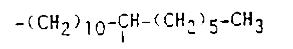 or

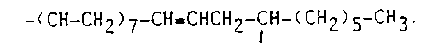

10. A reaction injection molded elastomer made by reacting in a closed mold a composition comprising polyether polyols greater than 500 average molecular weight, an amine terminated chain extender, an aromatic polyisocyanate and an organotin catalyst of the formula 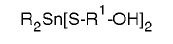 where R is butyl or octyl and
R¹ is a hydroxy substituted C₃-C_{S} alkylene.

11. The elastomer of Claim 10 in which R¹ is -CH₂-CH(OH)-CH₂-.

12. The elastomer of Claim 11 in which R is butyl.

13. A reaction injection molded elastomer made by reacting in a closed mold a composition comprising polyether polyols greater than 500 average molecular weight, an amine terminated chain extender, an aromatic polyisocyanate and an organotin catalyst of the formula 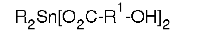 where R is butyl or octyl and
R¹ is a C₂-C₂₂ divalent hydrocarbyl group.

14_{.} The elastomer of Claim 13 in which R¹ is -(CH₂)ₙ-C₆H₄- where n = 0-3.

15. The elastomer of Claim 13 in which R¹ is -CH₂CH₂C₆H₄-.

16. The elastomer of Claim 13 in which R⁷ is 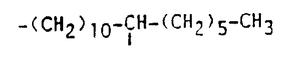 or

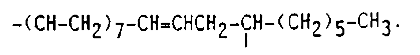

## Patentansprüche

1. Durch Reaktionsguß hergestelltes Elastomer, das durch Reaktion einer Zusammensetzung in einer geschlossenen Form hergestellt wird, wobei die Zusammensetzung Polyetherpolyole mit einem durchschnittlichen Molekulargewicht von mehr als 500, ein mit Amin abgeschlossenes Kettenverlängerungsmittel, ein aromatisches Polyisocyanat und einen Organozinnkatalysator der folgenden allgemeinen Formel umfaßt: 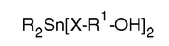 bworin R eine C₁-C₈-Alkylgruppe oder eine Arylgruppe ist,
R¹ eine zweiwertige C₂-C₂₂-Hydrocarbylgruppe ist, die auch einen Hydroxylsubstituenten enthalten kann, und
X eine Verbindungsgruppe darstellt, die -S- oder -0₂C- ist.

2. Elastomer nach Anspruch 1, wobei R Butyl oder Octyl ist.

3. Elastomer nach Anspruch 1, wobei X -S- ist.

4. Elastomer nach Anspruch 3, wobei R¹ mit Hydroxyl substituiertes C₃-Cₛ-Alkylen ist.

5. Elastomer nach Anspruch 3, wobei R¹ -CH₂-CH(OH)-CH₂-ist.

6. Elastomer nach Anspruch 1, wobei X-O₂C-ist.

7. Elastomer nach Anspruch 6, wobei R¹ -(CH₂)ₙ-C₆H₄- ist, worin n = 0-3 ist.

8. Elastomer nach Anspruch 7, wobei R¹ -(CH₂)ₙ-C₆H₄- ist.

9. Elastomer nach Anspruch 6, wobei R¹ 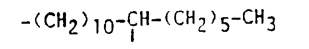 oder 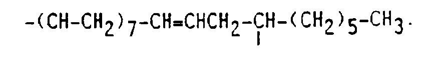 ist.

10. Durch Reaktionsguß hergestelltes Elastomer, das durch Reaktion einer Zusammensetzung in einer geschlossenen Form hergestellt wird, wobei die Zusammensetzung Polyetherpolyole mit einem durchschnittlichen Molekulargewicht von mehr als 500, ein mit Amin abgeschlossenes Kettenverlängerungsmittel, ein aromatisches Polyisocyanat und einen Organozinnkatalysator der Formel umfaßt: 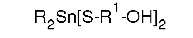 worin R Butyl oder Octyl ist, und
R¹ ein mit Hydroxyl substituiertes C₃-C₅-Alkylen ist.

11. Elastomer nach Anspruch 10, wobei R¹ -CH₂-CH(OH)-CH₂_ ist.

12. Elastomer nach Anspruch 11, wobei R Butyl ist.

13. Durch Reaktionsguß hergestelltes Elastomer, das durch Reaktion einer Zusammensetzung in einer geschlossenen Form hergestellt wird, wobei die Zusammensetzung Polyetherpolyole mit einem durchschnittlichen Molekulargewicht von mehr als 500, ein mit Amin abgeschlossenes Kettenverlängerungsmittel, ein aromatisches Polyisocyanat und einen Organozinnkatalysator der Formel umfaßt: 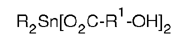 worin R Butyl oder Octyl ist, und
R¹ eine zweiwertige C₂-C₂₂-Hydrocarbylgruppe ist.

14. Elastomer nach Anspruch 13, wobei R¹ -(CH₂)ₙ-C₆H₄- ist, worin n 0-3 ist.

15. Elastomer nach Anspruch 13, wobei R¹ -CH₂CH₂C₆H₄- ist.

b16. Elastomer nach Anspruch 13, wobei R¹ 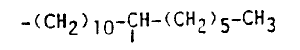 oder 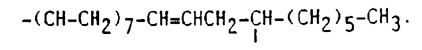 ist.

## Revendications

1. Elastomère moulé par injection pendant la réaction préparé par réaction dans un moule fermé d'une composition comprenant des polyéthers polyols de masse moléculaire moyenne supérieure à 500, un agent d'allongement de la chaîne à terminaison amine, un polyisocyanate aromatique et un catalyseur de type organoétain ayant la formule générale suivante: 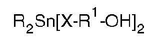 dans laquelle
R est un groupe alkyle en C₁-C₈ ou un groupe aryle,
R¹ est un groupe hydrocarbyle divalent en C₂-C₂₂ qui peut contenir aussi un substituant hydroxyle; et
X est un groupe de liaison qui est -S- ou -0₂C-.

2. Elastomère selon la revendication 1, où R est un groupe butyle ou octyle.

3. Elastomère selon la revendication 1, où X est -S-.

4. Elastomère selon la revendication 3, où R¹ est un groupe alkylène en C₃-C₅ substitué par hydroxy.

5. Elastomère selon la revendication 3, où R¹ est -CH₂-CH(OH)-CH₂-.

6. Elastomère selon la revendication 1, où X est -0₂C.

7. Elastomère selon la revendication 6, où R¹ est -(CH₂)ₙ-C₆H₄- où n = 0-3.

8. Elastomère selon la revendication 7, où R¹ est -(CH₂)₂-C₆H₄-.

9. Elastomère selon la revendication 6, où R⁷ est

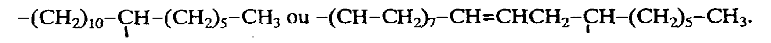

10. Elastomère moulé par injection pendant la réaction préparé par réaction dans un moule fermé d'une composition comprenant des polyéthers polyols de masse moléculaire moyenne supérieure à 500, un agent d'allongement de la chaîne à terminaison amine, un polyisocyanate aromatique et un catalyseur de type organoétain ayant la formule générale suivante: 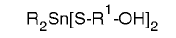 dans laquelle
R est un groupe butyle ou octyle et
R¹ est un groupe alkylène en C₃-C₅ substitué par hydroxy.

11. Elastomère selon la revendication 10, où R¹ est -CH₂-CH(OH)-CH₂-.

12. Elastomère selon la revendication 11, où R est le groupe butyle.

13. Elastomère moulé par injection pendant la réaction préparé par réaction dans un moule fermé d'une composition comprenant des polyéthers polyols de masse moléculaire moyenne supérieure à 500, un agent d'allongement de la chaîne à terminaison amine, un polyisocyanate aromatique et un catalyseur de type organoétain ayant la formule générale suivante: 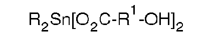 dans laquelle
R est un groupe butyle ou octyle, et
R¹ est un groupe hydrocarbyle divalent en C₂-C₂₂.

14. Elastomère selon la revendication 13, où R¹ est -(CH₂)ₙ-C₆H₄- où n = 0-3.

15. Elastomère selon la revendication 13, où R¹ est -CH₂-CH₂-C₆H₄-.

16. Elastomère selon la revendication 13, où R¹ est
